# EUROPÄISCHE PATENTSCHRIFT

(11) **EP 0 834 935 B1**
(45) Veröffentlichungstag und Bekanntmachung des Hinweises auf die Patenterteilung: **09.05.2001**
(21) Anmeldenummer: 97116726.7
(22) Anmeldetag: 25.09.1997
(51) Int. Cl.: H01M 2/12

(54) **Batterie mit einer Vorrichtung zur Abführung von Abgasen**
Battery with a device for exhausting the gases
Batterie avec dispositif pour évacuer les gaz

(30) Priorität: 26.09.1996 DE 29616824 U; 05.12.1996 DE 29621148 U; 01.04.1997 DE 29705725 U
(43) Veröffentlichungstag der Anmeldung: 08.04.1998
(73) Patentinhaber: Akkumulatorenfabrik Moll GmbH & Co. KG, 96231 Staffelstein (DE)
(72) Erfinder: Moll, Peter J., 96231 Staffelstein (DE)
(74) Vertreter: Zinnecker, Armin, Dipl.-Ing.

(56) Entgegenhaltungen:
- EP-A- 0 305 822
- EP-A- 0 496 539
- EP-A- 0 514 918
- EP-A- 0 680 104
- WO-A-95/15585
- DE-A- 4 032 858
- DE-U- 8 812 468
- DE-U- 9 015 535
- DE-U- 9 305 165
- DE-U- 9 413 805
- DE-U- 29 705 725
- US-A- 4 576 879
- PATENT ABSTRACTS OF JAPAN vol. 004, no. 032 (E-002), 19.März 1980 & JP 55 006717 A (YAMAHA MOTOR CO LTD), 18.Januar 1980,

## Beschreibung

Die Erfindung betrifft eine Batterie nach dem Oberbegriff des Anspruchs 1. Die Rückzündungsschutzfritte dient dazu, eine explosionsartige Entzündung der aus dem Batteriegehäuse austretenden Gase durch Zündfunken zu verhindern.

Aus der DE-GM 90 15 535 ist eine Batterie bekannt, die ein Batteriegehäuse, eine Haube, in dem Gehäuse angeordnete Zellen und mindestens eine Öffnung zum Ableiten der aus den Zellen austretenden Gase aufweist, wobei in die Öffnung eine Rückzündungsschutzfritte eingesetzt ist. Bei der Batterie handelt es sich insbesondere um eine Mehrzellen-Batterie, vorzugsweise eine Starterbatterie. Die Batterie als solche ist aus der DE-OS 34 44 011 als sogenannte Kamina-Batterie bekannt. In ihr befindet sich ein Kanal zum Ableiten der aus den Zellen austretenden, im allgemeinen säurehaltigen Gase.

Die aus der DE-GM 90 15 535 bekannte Rückzündungsschutzfritte ist in eine am Rand der Haube der Batterie sacklochartig erweiterte Öffnung randdicht eingesetzt und dadurch vor Beschädigungen geschützt. Sie kann ferner leicht montiert und gegebenenfalls ausgewechselt werden. Durch Seitenarretierung wird Festsitz im Deckel erreicht; eine Demontage ist nur gegen Widerstand möglich.

Beim Betrieb der aus der DE-GM 90 15 535 vorbekannten Batterie treffen Säure-tröpfchen, die auch Feststoffpartikel enthalten können und in den Gasen mitgeführt werden, auf die Rückzündungsschutzfritte auf, die dadurch in ihrer Leistungsfähigkeit vermindert werden kann.

Eine Batterie nach dem Oberbegriff des Anspruchs 1 ist aus der WO-A-9515585 bekannt. Dort ist eine Kondensierungsscheibe vorhanden, die von dem zugehörigen Gehäuse beabstandet ist, so daß eine ringförmige Öffnung zwischen der Kondensierungsscheibe und dem Gehäuse geschaffen wird.

Aufgabe der Erfindung ist es, bei einer Batterie der eingangs angegebenen Art den Schutz der Rückzündungsschutzfritte zu verbessern.

Gemäß der Erfindung wird diese Aufgabe durch die kennzeichnenden Merkmale des Anspruchs 1 gelöst. Vor der Rückzündungsschutzfritte ist eine Prallwand angeordnet. Der Gasstrom aus der Batterie trifft mit den möglicherweise darin enthaltenen Säuretropfen zunächst auf diese Prallwand auf. Soweit Säuretropfen vorhanden sind, können diese an der Prallwand vorabgeschieden werden. Der "getrennte", von den Säuretropfen und Partikeln befreite Gasstrom gelangt dann zu der Rückzündungsschutzfritte. Er kann von dort "ins Freie" entgast werden. Dies kann, wie in der DE-GM 90 15 535 beschrieben, mit oder ohne Einsteckwinkelstück und Schlauch geschehen. Bei Batterien, die ohne Zusatz-Gasableitung (Winkelstück und Schlauch) arbeiten, kann der Abgangsstutzen entfallen und durch eine Lochplatte mit einer oder mehreren Gasöffnungen ersetzt werden. Die Entgasung erfolgt ins Freie bzw. in den Motorraum des Kraftfahrzeugs, in dem sich die Batterie befindet. Die Prallwand weist eine oder mehrere Öffnungen auf. Die Gase gelangen durch diese Öffnungen zur Rückzündungsschutzfritte bzw. zur Filterkammer. Die Öffnung bzw. die Öffnungen ist bzw. sind im oberen Bereich der Prallwand vorgesehen. Wenn vor der Prallwand eine Vorkammer angeordnet ist, wird dadurch der für die Säure zur Verfügung stehende Sammelraum größer.

Vorteilhafte Weiterbildungen sind in den Unteransprüchen beschrieben.

Vorteilhaft ist es, wenn vor der Prallwand eine Vorkammer angeordnet ist. Die Vorkammer kann dazu dienen, die vorabgeschiedene Säure zu sammeln.

Die Rückzündungsschutzfritte kann in einer Filterkammer angeordnet sein.

Die Vorkammer und/oder die Filterkammer können von einem Rückzündungsschutzgehäuse gebildet sein.

Eine weitere vorteilhafte Weiterbildung ist dadurch gekennzeichnet, daß mehrere Öffnungen vorhanden sind und daß die unteren Begrenzungen der Öffnungen auf einer horizontalen Linie liegen. Wenn vor der Prallwand eine Vorkammer angeordnet ist, kann hierdurch der für die Säuretropfen zur Verfügung stehende Sammelraum optimal ausgenutzt werden.

Vorzugsweise ist die Rückzündungsschutzfritte bzw. das Rückzündungsschutz-Gehäuse in der Öffnung fixiert. Für die Rückzündungsschutzfritte bzw. das Rückzündungsschutz-Gehäuse ist also eine Seitenarretierung vorgesehen, durch die eine Lagesicherung und eine Sicherung gegen Herausfallen erreicht werden. Die Rückzündungsschutzfritte bzw. das Rückzündungsschutz-Gehäuse ist in der Öffnung fixiert und kann nur gegen Widerstand herausgezogen werden.

Die Fixierung kann dadurch erreicht werden, daß das Rückzündungsschutz-Gehäuse mit der Haube verklebt ist. Eine weitere vorteilhafte Weiterbildung ist dadurch gekennzeichnet, daß das Rückzündungsschutz-Gehäuse mit der Haube verrastet ist. Dies erfolgt vorzugsweise durch einen an dem Gehäuse vorgesehenen Wulstrand und eine entsprechende Nut an der Haube. Es ist auch möglich, mehrere, vorzugsweise zwei Wulstränder vorzusehen, die in eine entsprechende Anzahl von an der Haube vorgesehenen Nuten eingreifen. Neben der Verklebung und Verrastung sind allerdings auch andere Arten der Verbindung möglich.

Stattdessen oder zusätzlich kann die Fixierung dadurch bewirkt werden, daß an der Haube ein die Rückzündungsschutzfritte bzw. das Rückzündungsschutz-Gehäuse fixierender Hinterschnitt vorgesehen ist. Der Hinterschnitt kann als an der Haube vorgesehener Vorsprung ausgeführt sein, der mit dem Eindrücken der Rückzündungsschutzfritte bzw. des Rückzündungsschutz-Gehäuses zu einer Verklinkung führt. Die Rückzündungsschutzfritte bzw. das Rückzündungsschutz-Gehäuse ist dann fixiert und kann nur gegen Widerstand herausgezogen werden.

Nach einer weiteren vorteilhaften Weiterbildung sind Abstandhalter vorgesehen, die eine spitze Form aufweisen und die die Rückzündungsschutzfritte in ihrer Lage halten. Vorzugsweise sind diese Abstandhalter an der Außenseite der Prallwand und/oder an der Innseite eines Außenteils des Rückzündungsschutz-Gehäuses vorgesehen. Die Spitzen der Abstandhalter bilden eine gasdichte Dichtung. Hierdurch kann ohne zusätzliche, weitere Dichtmittel eine Gasstromumgehung der Rückzündungsschutzfritte verhindert werden.

Nach einer weiteren vorteilhaften Weiterbildung ist vor der Prallwand eine Kappe, vorzugsweise eine Gummikappe vorgesehen. Die Kappe bzw. Gummikappe ist vorzugsweise auf eine Hülse aufgesteckt. Die Hülse kann mit dem Vorkammerteil verbunden sein.

Ausführungsbeispiele der Erfindung werden nachstehend anhand der beigefügten Zeichnung im einzelnen erläutert. In der Zeichnung zeigt
- Fig. 1: einen Teil einer Starterbatterie in einem Längsschnitt,
- Fig. 2: einen Schnitt längs der Linie II-II in Fig. 1,
- Fig. 3: einen vergrößerten Ausschnitt aus der Fig. 1,

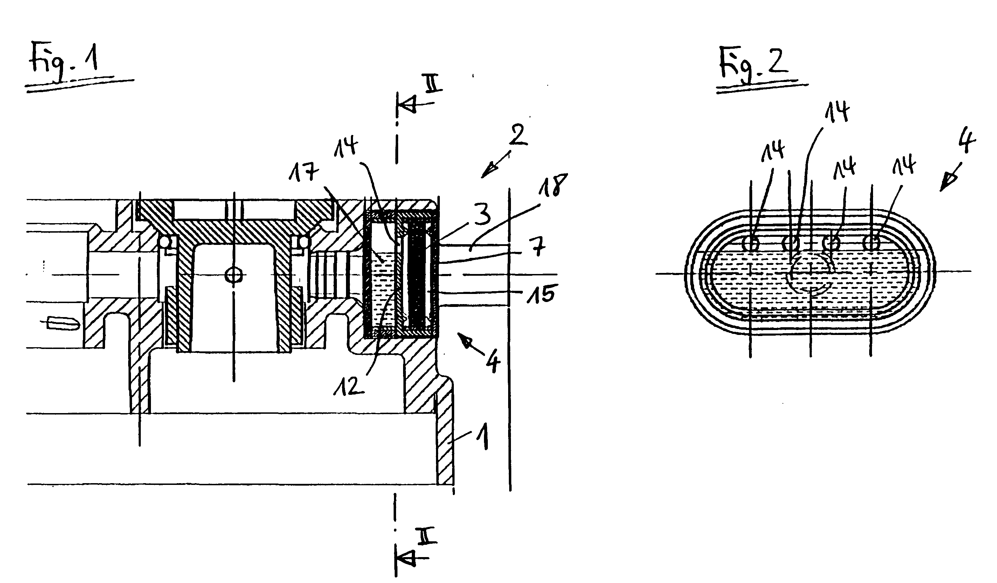

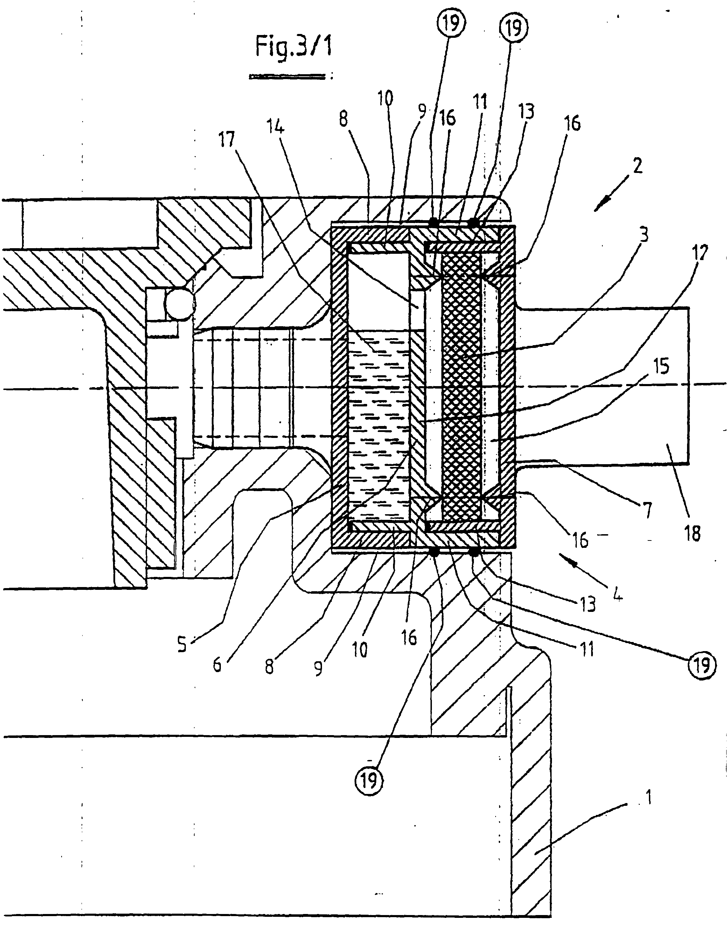

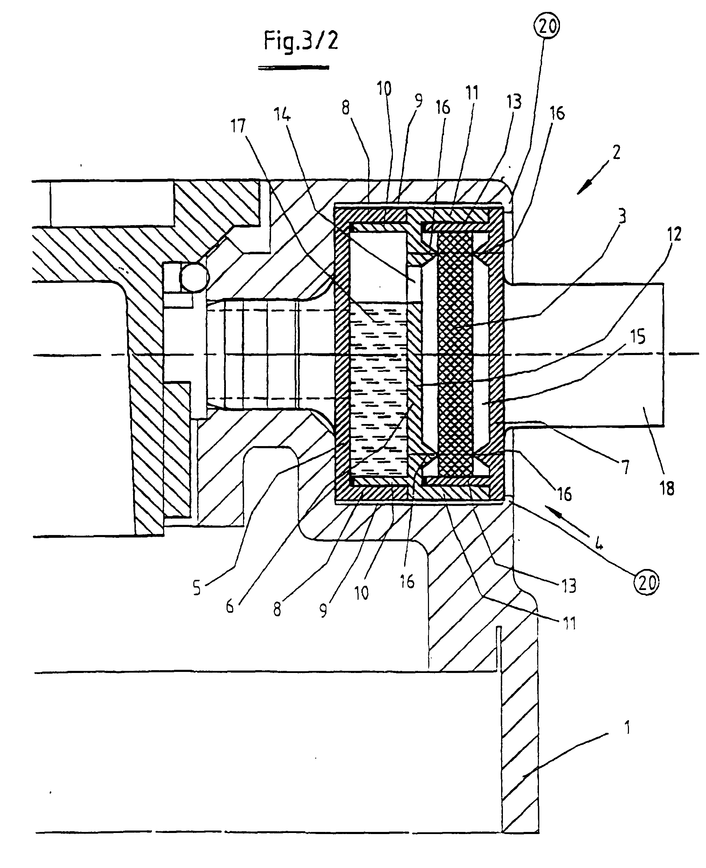

- Fig. 3/1: eine abgewandelte Ausführungsform, bei der das Rückzündungsschutz-Gehäuse mit dem Deckel durch Verklebung bzw. Verrastung verbunden ist,

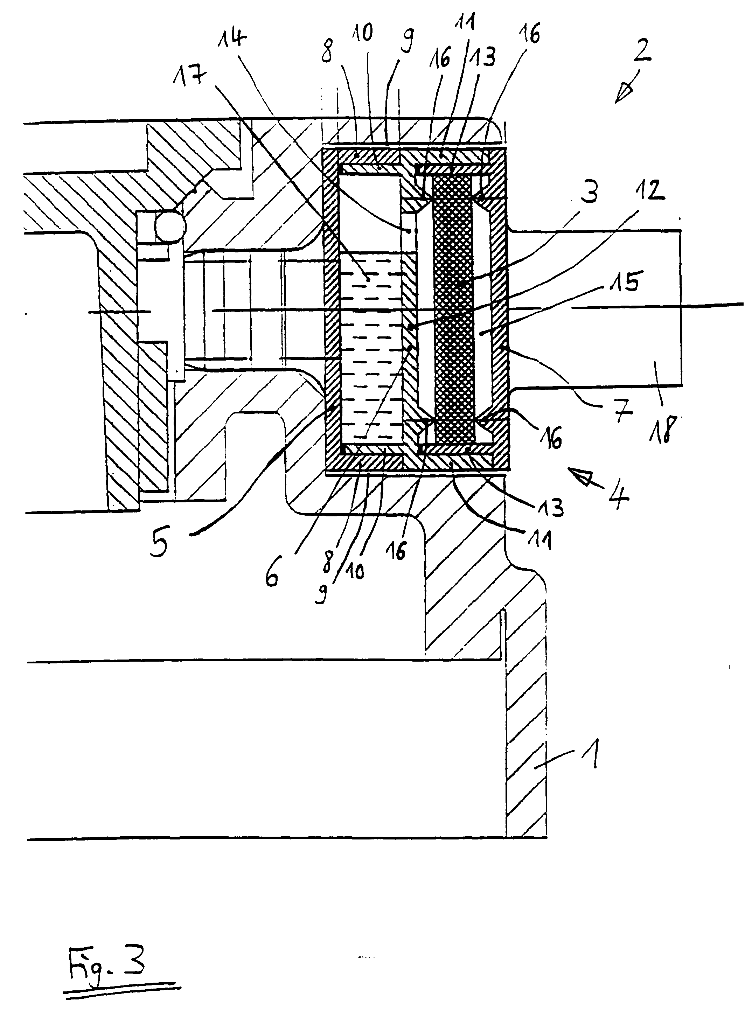

- Fig. 3/2: eine weitere Abwandlung, bei der das Rückzündungsschutz-Gehäuse durch einen Hinterschnitt in der Haube fixiert ist und

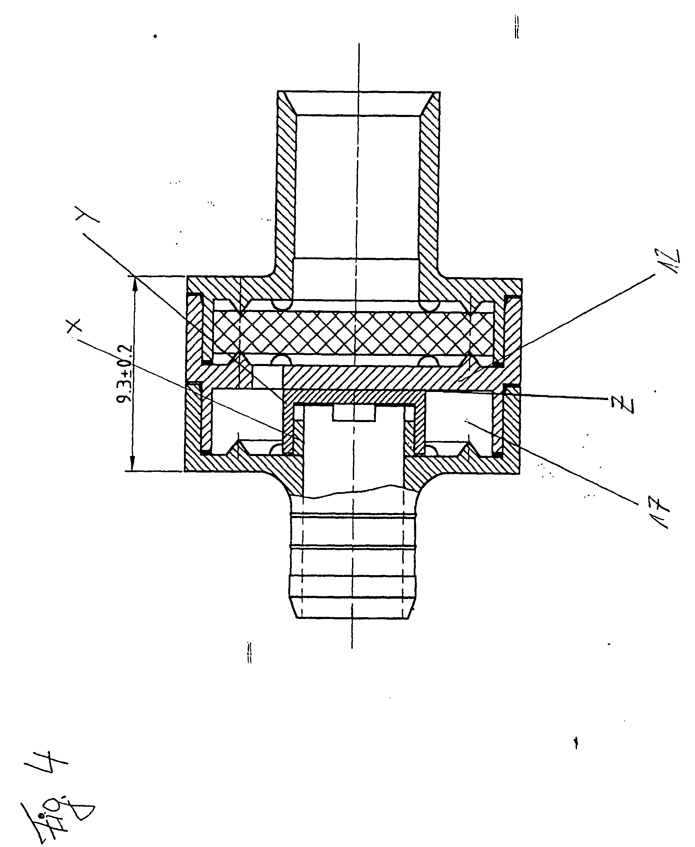

- Fig. 4: eine weitere Abwandlung mit einer Hülse und einer Gummikappe.

In den Fig. 1 und 3 ist die Haube 1 einer Batterie dargestellt, die eine Öffnung 2 zum Ableiten der aus den Zellen der Batterie austretenden Gase aufweist. In die Öffnung 2 ist eine Rückzündungsschutzfritte 3 eingesetzt. Die Öffnung 2 ist in der aus der DE-GM 90 15 535 bekannten Weise sacklochartig erweitert.

Die Rückzündungsschutzfritte 3 befindet sich in einem Rückzündungsschutz-Gehäuse 4, welches seinerseits aus einem Vorkammerteil 5, einem Prallwandteil 6 und einem Außenteil 7 besteht, die miteinander verbunden, vorzugsweise verschweißt, vorzugsweise ultraschallverschweißt oder thermisch verschweißt sind. Das topfförmige Vorkammerteil besitzt einen Rand 8, der innerhalb der sacklochartigen Erweiterung 9 der Öffnung 2 vorgesehen ist. In den Rand 8 ist der Innenrand 10 des Prallwandteils 6 eingesteckt. Der äußere Rand 11 des Prallwandteils 6 weist im wesentlichen dieselben Abmessungen wie der Rand 8 des Vorkammerteils 5 auf und verläuft von diesem weg nach außen. Das innere Ende des Randes 11 stützt sich am äußeren Ende des Randes 8 ab. Die Ränder 10 und 11 werden durch die im wesentlichen ebene Prallwand 12 miteinander verbunden.

In den äußeren Rand 11 des Prallwandteils 6 ist der Rand 13 des topfförmigen Außenteils 7 eingesteckt.

Der von der Batterie kommende Gasstrom trifft auf der Prallplatte 12 auf, so daß in dem Gasstrom enthaltene Säuretropfen vorabgeschieden werden. Der auf diese Weise getrennte, von den Säuretropfen befreite Gasstrom tritt dann über die in der Prallplatte 12 vorgesehenen Entlüftungslöcher bzw. Öffnungen 14 in die Filterkammer 15 ein, die zwischen Prallplatte 12 und Außenteil 7 gebildet wird und in der sich die Rückzündungsschutzfritte 3 befindet. Um die Rückzündungsschutzfritte 3 in der in der Zeichnung dargestellten Lage zu halten, sind an der Außenseite der Prallwand 12 und der Innenseite des Außenteils 7 Abstandhalter 16 vorgesehen, die eine spitze Form aufweisen. Durch diese Spitzenprofilierung wird während des unter Druck stattfindenden Schweißvorgangs der Teile 5, 6, 7 eine Spitzenabdichtung mit der Rückzündungsschutzfritte 3 gebildet. Diese Dichtung verhindert ohne zusätzliche Dichtmittel jede Gasstromumgehung der Rückzündungsschutzfritte. Die an der Prallwand 12 vorabgeschiedenen Säuretropfen sammeln sich in der Vorkammer 17, die zwischen dem Vorkammerteil 5 und dem Prallwandteil 6 gebildet wird. Die Entgasung erfolgt von der Filterkammer 15 über den Abgangsstutzen 18 oder eine in der Zeichnung nicht dargestellte Lochplatte mit einer oder mehreren Gasöffnungen ins Freie bzw. den Motorraum.

Aus der Fig. 2 ist ersichtlich, daß insgesamt vier Öffnungen 14 vorhanden sind, die sich im oberen Bereich der Prallwand 12 befinden und deren untere Begrenzungen auf einer horizontalen Linie liegen, die den höchstmöglichen "Säurespiegel" bildet.

Bei den abgewandelten Ausführungsformen, die in den Fig. 3/1 und 3/2 dargestellt sind, werden für den Zeichnungsfig. 1 bis 3 entsprechende Teile dieselben Bezugszeichen verwendet, so daß diese Teile nicht erneut beschrieben werden müssen.

Bei der Variante gemäß Fig. 3/1 ist das Rückzündungsschutz-Gehäuse 4 in der Öffnung 2 der Haube 1 verrastet. Diese Verrastung erfolgt durch zwei an der äußeren Umfangsfläche des äußeren Rands 11 des Prallwandsteils 6 des Rückzündungsschutz-Gehäuses 4 vorgesehene Wulstränder 19, die in zwei entsprechende Nuten an der Innenfläche der Öffnung 2 der Haube 1 eingreifen. Die Wulstränder 19 und die Nuten sind in ihrer Höhe bzw. Tiefe bzw. sonstigen Ausgestaltung derart aufeinander abgestimmt, daß das Rückzündungsschutz-Gehäuse 4 zuverlässig montierbar ist und nach der Montage nur mit einem Werkzeug wieder demontierbar ist. Durch die beschriebene Ausgestaltung ist das Rückzündungsschutz-Gehäuse 4 in der Öffnung 2 durch eine Wulstrandfixierung verankert, bei der der äußere Rand 11 des Prallwandteils 6 mit der Innenwand der Öffnung 2 durch eine Gegenwulstgestaltung bzw. Nut verankert wird und auf diese Weise eine feste Verbindung bildet. Das Rückzündungsschutzgehäuse 4 ist mit der Haube 1 durch eine Wulstrandanbringung auf der Außenseite mit der entsprechenden Gegenwulstausformung bzw. Nut in der Haube 19 verrastet. Die Fixierung wird durch eine formgebende Wulstverrastung erreicht, also durch Anbringung von einem oder mehreren Wulsträndern an der Außenseite des Rückzündungsschutz-Gehäuses, die in entsprechende Formvertiefungsrillen oder Nuten in der sackartigen Vertiefung des Deckels einrasten.

Anstelle der Rastverbindung kann das Rückzündungsschutz-Gehäuse 4 in der Öffnung 2 auch durch eine Verklebung erfolgen, beispielsweise an den in Fig. 3/1 mit dem Bezugszeichen 19 versehenen Stellen.

Bei der in Fig. 3/2 dargestellten abgewandelten Ausführungsform ist an der Haube 1 ein das Rückzündungsschutz-Gehäuse 4 fixierender Hinterschnitt 20 vorgesehen. Der Hinterschnitt 20 ist als ein den Querschnitt der Öffnung 2 verkleinernder Vorsprung ausgestaltet. Das Rückzündungsschutz-Gehäuse 4 befindet sich in der in Fig. 3/2 gezeigten Stellung in der Einrastposition. Der Hinterschnitt 20 ist derart ausgebildet und dimensioniert, daß er bei der Montage eine Einführung des Rückzündungsschutz-Gehäuses 4 zuläßt und dieses dann verrastet, so daß eine Entnahme des Rückzündungsschutz-Gehäuses 4 blockiert bzw. verhindert wird. Der axiale Abstand des Hinterschnitts 20 vom Grund der Öffnung 2 ist derart bemessen, daß das Rückzündungsschutz-Gehäuse 4 in axialer Richtung fest sitzt. Der Hinterschnitt 20 liegt dabei am äußeren Rand des Außenteils 7 an.

Die Figur 4 zeigt eine weitere abgewandelte Ausführungsform, bei der im Unterschied zu den bereits beschriebenen Ausführungsformen das Vorkammerteil 5 mit einer Hülse X versehen ist, die mit der Längsachse des Rückzündungsschutz-Gehäuses 4 koaxial verläuft und auf die eine Gummikappe Y aufgesteckt ist. Die Gummikappe Y besitzt einen zylinderförmigen Mantelteil, mit dem sie auf die der Prallwand 12 zugewandten Hülse X aufgesteckt ist, und einen Bodenteil, der parallel zur Prallwand 12 verläuft. Der Vorkammerteil 5, die Hülse X und die Gummikappe Y sind derart dimensioniert, daß zwischen dem Bodenteil der Gummikappe Y und der Prallwand 12 ein kleiner Abstand bzw. Spalt Z verbleibt. Ferner besteht zwischen der Hülse X und dem Mantelteil der Gummikappe Y eine Preßpassung. Diese beiden Teile sind derart aufeinander abgestimmt, daß die Gummikappe Y nach der Montage nicht mehr von der Hülse X abgehen kann, sondern durch die erwähnte Preßpassung zuverlässig festgehalten wird.

Die Gummikappe Y arbeitet im Betrieb als Ventil. Beim Betrieb der Batterie entstehende Gase und austretende Flüssigkeit, die durch die Zentralentgasung im Batteriedeckel entweichen, werden beim Auftreffen auf die Gummikappe bzw. auf deren Bodenteil "zwangsgebremst". Wenn der Druck weiter ansteigt, wird die Gummikappe Y zur Prallwand 12 hin verschoben. Bei weiter ansteigendem Druck liegt dann der Bodenteil der Gummikappe Y an der Prallwand 12 an. Wenn der Druck dann noch weiter ansteigt werden die Gase und die Flüssigkeit durch das Paßmaß zwischen der Hülse X und dem Mantelteil der Gummikappe Y hindurchgedrückt. Sie müssen den durch dieses Paßmaß (Spannung der Gummikappe über der Hülse) und das Material der Gummikappe bestimmten Schließdruck überwinden und können dann in die Vorkammer 17 eintreten.

Der Bodenteil der Gummikappe Y wirkt auf diese Weise als Prallwand. Er wird zunächst durch die Preßpassung zwischen Hülse X und Gummikappe Y fixiert und bei zunehmendem Druck durch die Prallwand 12 festgehalten.

Die technische Lösung nach Fig. 4 mit einer Ventilgummikappe Y und der nachgeschalteten Rückzündungsschutzfritte 3 zur Vermeidung von Rückzündung von außen kann in normalen Bleisäure-Batterien mit flüssigem Elektrolyten und auch in Batterien mit festgelegtem Elektrolyten (sowohl Gel-Technik als auch Vlies-Technik), die zur Gruppe der gasdicht verschlossenen Batterien gehören, Verwendung finden. Diese Batterien werden international als VRLA-Batterien (Valve Regulated Lead Acid) bezeichnet. Hierbei handelt es sich um komplett wartungsfreie Batterien, die die als Sauerstoffzyklus bekannte Rekombination zur Vermeidung von Elektrolytverlust umsetzen, welche durch die gemäß der Ausführungsform nach Fig. 4 eingesetzte Ventiltechnik im Überdruckbetrieb nur einen begrenzten (Innen-) Druck zuläßt und andererseits keine Gase eindringen läßt.

## Patentansprüche

1. Batterie mit einem Batteriegehäuse, einer Haube (1), in dem Gehäuse angeordneten Zellen und mindestens einer Öffnung (2) zum Ableiten der aus den Zellen austretenden Gase, in die eine Rückzündungsschutzfritte (3) eingesetzt ist, vor der eine Prallwand (12) angeordnet ist,
**dadurch gekennzeichnet,**
daß die Prallwand (12) eine oder mehrere Öffnungen (14) aufweist, die im oberen Bereich der Prallwand (12) vorgesehen ist bzw. sind.

2. Batterie nach Anspruch 1, dadurch gekennzeichnet, daß vor der Prallwand (12) eine Vorkammer (17) angeordnet ist.

3. Batterie nach Anspruch 1 oder 2, dadurch gekennzeichnet, daß die Rückzündungsschutzfritte (3) in einer Filterkammer (15) angeordnet ist.

4. Batterie nach Anspruch 2 oder 3, dadurch gekennzeichnet, daß die Vorkammer (17) und/oder die Filterkammer (15) von einem Rückzündungsschutz.-Gehäuse (4) gebildet sind.

5. Batterie nach einem der vorhergehenden Ansprüche, dadurch gekennzeichnet, daß mehrere Öffnungen (14) vorgesehen sind, deren untere Begrenzungen auf einer horizontalen Linie liegen.

6. Batterie nach einem der vorhergehenden Ansprüche, dadurch gekennzeichnet, daß die Rückzündungsschutzfritte (3) bzw. das Rückzündungsschutz-Gehäuse (4) in der Öffnung (2) fixiert ist.

7. Batterie nach Anspruch 6, dadurch gekennzeichnet, daß das Rückzündungsschutz-Gehäuse (4) mit der Haube (1) verklebt ist.

8. Batterie nach Anspruch 6 oder 7, dadurch gekennzeichnet, daß das Rückzündungsschutz-Gehäuse (4) mit der Haube (1) verrastet ist, vorzugsweise durch einen an dem Gehäuse (4) vorgesehenen Wulstrand (19) und eine entsprechende Nut an der Haube (1).

9. Batterie nach einem der Ansprüche 6 bis 8, dadurch gekennzeichnet, daß an der Haube (1) ein die Rückzündungsschutzfritte (3) bzw. das Rückzündungsschutz-Gehäuse (4) fixierender Hinterschnitt (20) vorgesehen ist.

10. Batterie nach einem der vorhergehenden Ansprüche, dadurch gekennzeichnet, daß Abstandhalter (16) vorgesehen sind, vorzugsweise an der Außenseite der Prallwand (12) und/oder an der Innenseite eines Außenteils (7) des Rückzündungsschutz-Gehäuses (4), die eine spitze Form aufweisen und die die Rückzündungsschutzfritte (3) in ihrer Lage halten.

11. Batterie nach einem der vorhergehenden Ansprüche, dadurch gekennzeichnet, daß vor der Prallwand (12) eine Kappe, vorzugsweise eine Gummikappe (Y) vorgesehen ist, die auch als Ventil funktioniert.

12. Batterie nach Anspruch 11, gekennzeichnet durch eine Hülse (X), auf die die Kappe bzw. Gummikappe (Y) aufgesteckt ist.

## Claims

1. Battery with a battery housing, a cover (1), cells arranged in the housing and at least one opening (2) for discharging the gases escaping from the cells, in which opening (2) is inserted a flashback arrester frit (3) in front of which is arranged a baffle (12),
**characterised in that**
the baffle (12) exhibits one or several openings (14) which is or are provided in its upper section.

2. Battery according to Claim 1, characterised in that arranged in front of the baffle (12) is an antechamber (17).

3. Battery according to Claim 1 or 2, characterised in that the flashback arrester frit (3) is arranged in a filter chamber (15).

4. Battery according to Claim 2 or 3, characterised in that the antechamber (17) and/or the filter chamber (15) are formed by a flashback arrester housing (4).

5. Battery according to one of the preceding Claims, characterised in that several openings (14) are provided, the lower limits of which lie in a horizontal line.

6. Battery according to one of the preceding Claims, characterised in that the flashback arrester frit (3) or the flashback arrester housing (4) is fixed in opening (2).

7. Battery according to Claim 6, characterised in that the flashback arrester housing (4) is bonded to cover (1).

8. Battery according to Claim 6 or 7, characterised in that the flashback arrester housing (4) is latched in the cover (1), preferably by a beaded edge (19) provided at said housing (4) and a corresponding groove in the cover (1).

9. Battery according to one of Claims 6 to 8, characterised in that provided at the cover (1) is an undercut (20) that fixes the flashback arrester frit (3) or the flashback arrester housing (4).

10. Battery according to one of the preceding claims, characterised in that spacers (16) are provided, preferably on the outside of the baffle (12) and/or on the inside of the outer portion (7) of the flashback arrester housing (4) which exhibit a pointed shape and hold the flashback arrester frit (3) in position.

11. Battery according to one of the preceding Claims, characterised in that provided in front of the baffle (12) is a cap, preferably a rubber cap (Y), which also functions as a valve.

12. Battery according to Claim 11, characterised by a sleeve (X), onto which the cap or rubber cap (Y) is fitted.

## Revendications

1. Batterie comportant un boîtier de batterie, un couvercle (1), des cellules disposées dans le boîtier et au moins une ouverture (2) pour dériver les gaz sortant des cellules, dans laquelle une fritte de protection contre le retour de flamme (3) est insérée, devant laquelle une paroi d'impact (12) est disposée,
caractérisée en ce que
la paroi d'impact (12) présent une ou plusieurs ouvertures (14) qui est ou sont prévue(s) dans la zone supérieure de la paroi de rebondissement (12).

2. Batterie selon la revendication 1, caractérisée en ce qu'une antichambre (17) est disposée devant la paroi d'impact (12).

3. Batterie selon les revendications 1 ou 2, caractérisée en ce que la fritte de protection contre le retour de flamme (3) est disposée dans une chambre de filtrage (15).

4. Batterie selon les revendications 2 ou 3, caractérisée en ce que l'antichambre (17) et/ou la chambre de filtrage (15) sont constituées par un boîtier de protection contre le retour de flamme (4).

5. Batterie selon l'une quelconque des revendications précédentes,
caractérisée en ce que plusieurs ouvertures (14) sont prévues dont les délimitations inférieures se trouvent sur une ligne horizontale.

6. Batterie selon l'une quelconque des revendications précédentes,
caractérisée en ce que la fritte de protection contre le retour de flamme (3) ou le boîtier de protection contre le retour de flamme (4) est fixé dans l'ouverture (2).

7. Batterie selon la revendication 6, caractérisée en ce que le boîtier de protection contre le retour de flamme (4) est collé au couvercle (1).

8. Batterie selon les revendications 6 ou 7, caractérisée en ce que le boîtier de protection contre le retour de flamme (4) est encliqueté dans le couvercle (1), de préférence par un bord en bourrelet (19) prévu sur le boîtier (4) et une rainure correspondante dans le couvercle (1).

9. Batterie selon l'une quelconque des revendications 6 à 8, caractérisée en ce qu'une contre-dépouille est prévue au couvercle (1) fixant la fritte de protection contre le retour de flamme (3) ou le boîtier de protection contre le retour de flamme (4).

10. Batterie selon l'une quelconque des revendications précédentes,
caractérisée en ce que des écarteurs (16) sont prévus, de préférence du côté extérieur de la paroi d'impact (12) et/ou du côté intérieur de la partie extérieure (7) du boîtier de protection contre le retour de flamme (4), qui présentent une forme pointue et qui maintiennent la fritte de protection contre le retour de flamme (3) dans sa position.

11. Batterie selon l'une quelconque des revendications précédentes,
caractérisée en ce que devant la paroi d'impact (12) un capuchon, de préférence un capuchon en caoutchouc (Y), est prévu qui fonctionne aussi comme soupape.

12. Batterie selon la revendication 11, caractérisée par une douille (X) sur laquelle le capuchon ou le capuchon en caoutchouc (Y) est montée.
